# EUROPÄISCHE PATENTSCHRIFT

(11) **EP 2 522 780 B1**
(45) Veröffentlichungstag und Bekanntmachung des Hinweises auf die Patenterteilung: **05.04.2017**
(21) Anmeldenummer: 11178063.1
(22) Anmeldetag: 19.08.2011
(51) Int. Cl.: E02D 27/12, E02D 27/42, E02D 27/52, F03D 13/20, E02B 17/00

(54) **Offshore-Fundament für Windenergieanlagen**
Offshore foundation for wind energy facilities
Fondation offshore pour éolienne

(30) Priorität: 12.05.2011 DE 202011100627 U; 31.05.2011 DE 202011101599 U
(43) Veröffentlichungstag der Anmeldung: 14.11.2012
(73) Patentinhaber: Maritime Offshore Group GmbH, 28355 Bremen (DE)
(72) Erfinder: Reales Bertomeo, Emilio, 27753 Delmenhorst (DE)
(74) Vertreter: Eisenführ Speiser

(56) Entgegenhaltungen:
- EP-A2- 2 067 915
- WO-A1-2007/106044
- WO-A1-2010/147481
- DE-A1- 10 357 392
- DE-A1-102007 039 957
- US-A- 3 852 969

## Beschreibung

Die vorliegende Erfindung betrifft ein Offshore-Fundament für Windenergieanlagen. Derartige Fundamente oder Tragstrukturen dienen dazu, Windenergieanlagen auf dem Meeresgrund sicher zu verankern.

Seit einiger Zeit werden Windenergieanlagen nicht nur "On-Shore", also an Land, sondern verstärkt auf dem Meer "Offshore" installiert, beispielsweise in sogenannten Offshore-Windparks in der Nord- und Ostsee. Die Offshore-Windenergieanlagen sind extremen Bedingungen ausgesetzt. Sie werden beispielsweise in 20 bis 60 Metern Meerestiefe mit Hilfe eines Fundaments verankert. Das Fundament, welches auch als Tragstruktur bezeichnet werden kann, ist hohen mechanischen und chemischen Belastungen sowie Meeresströmungen ausgesetzt. Verschiedene Typen von Offshore-Fundamenten sind bekannt, beispielsweise Monopile-, Jacket-, Tripod-, Tripile- oder Bucket-Konstruktionen. Die vorliegende Erfindung betrifft in erster Linie eine sogenannte Jacket-Konstruktion. Diese ist eine Fachwerkkonstruktion aus Stahl.

Das Dokument EP 2 067 915 A2 zeigt beispielsweise eine solche Fachwerkkonstruktion.

Aufgabe der vorliegenden Erfindung ist es, ein Offshore-Fundament bzw. eine Tragstruktur für Windenergieanlagen anzugeben, insbesondere ein solches Offshore-Fundament, welches mit relativ geringem Aufwand herstellbar, transportier und montierbar und/oder reparierbar ist.

Die Erfindung löst die Aufgabe durch eine Offshore-Tragstruktur mit mehreren, vorzugsweise sechs im Meeresgrund verankerbaren, insbesondere rohrförmigen Pfählen, und einer mit den Pfählen verbindbaren, aus einer Vielzahl von Stäben, insbesondere Stahl-Rohren, zusammengesetzten Fachwerkstruktur, indem die Fachwerkstruktur aus mehreren vorgefertigten Fachwerksegmenten zusammensetzbar ist, wobei jedes Fachwerksegment sechs Ecken aufweist, die mit den Ecken eines weiteren Fachwerksegments verbindbar sind.

Die Stahl-Rohre sind vorzugsweise mittels Knoten zu der Fachwerkstruktur zusammengesetzt. Ein derartiger Knoten verbindet vorzugsweise zwei oder mehr, insbesondere mindestens drei Rohre miteinander. Die Fachwerksegmente sind erfindungsgemäß sechseckig ausgebildet. Sechseckig ausgebildet bezieht sich hier im Wesentlichen auf einen Querschnitt des Fachwerksegments. Vorzugsweise weisen die Fachwerksegmente bezogen auf eine Zentralachse den sechseckigen Querschnitt auf und sind vorzugsweise im Wesentlichen zylindrisch oder konisch ausgebildet. Insbesondere die sechseckige Form der Tragstruktur, welche auf vorzugsweise sechs im Meeresgrund verankerbaren Pfählen gestützt ist, ist vorteilhaft, da hierdurch eine vorteilhafte Krafteinleitung stattfindet. Zudem weist die Tragstruktur so eine hohe Steifigkeit und Stabilität auf, wodurch das Gesamtgewicht und so der Materialverbrauch der Tragstruktur verringert werden.

Gemäß einem weiteren Aspekt der Erfindung oder einer bevorzugten Ausführungsform wird die eingangs genannte Aufgabe gelöst durch eine Tragstruktur nach dem Oberbegriff des Anspruchs 1, wobei die Fachwerkesegmente im Wesentlichen aus HFI-Rohren zusammengesetzt sind. HFI (Hochfrequenz-Induktionsschweißen) -Rohre sind auf einfache Art und Weise herstellbar, indem Bleche gewalzt, zu Rohren gebogen und anschließend mit einer längs verlaufenden HFI-Schweißnaht geschlossen werden. Derartige Rohre sind gut verfügbar und kostengünstig. Die Bildung der Tragstruktur aus derartigen Rohren ist vorteilhaft, da so Kosten reduziert werden können. Desweiteren sind Herstellungszeiten für eine derartige Tragstruktur verkürzt, da HFI-Rohre gut auf dem Markt verfügbar sind.

In einem weiteren Aspekt oder einer bevorzugten Ausführungsform der Tragstruktur wird die obengenannte Aufgabe bei einer Tragstruktur nach Oberbegriff von Anspruch 1 gelöst, indem einige oder alle Knoten der vorgefertigten Fachwerksegmente aus Doppelrohrstrukturen gebildet sind. Derartige Doppelrohrstrukturen sind auf einfache Art und Weise herstellbar. Sie stellen eine einfache Art und Weise Rohre zu verbinden dar.

Vorzugsweise wird eine solche Doppelrohrstruktur gebildet, indem ein Rohrstück oder Rohrstumpf zunächst erwärmt wird. In den erwärmten Rohrstumpf wird dann ein zweites Rohrstück, dessen Außendurchmesser im Wesentlichen dem Innendurchmesser des erwärmten Rohrstumpfes entspricht, eingeschoben. Durch rasches Abkühlen des Rohrstumpfes schrumpft dieser, wodurch eine Verbindung zwischen dem Rohrstumpf und dem Rohrstück mit dem kleineren Durchmesser gebildet wird. Das Rohrstück mit dem kleineren Durchmesser ist dann derart in dem Rohrstumpf angeordnet, dass es in axialer Richtung ein Stückchen aus dem Rohrstumpf heraussteht, sodass auf den vorstehenden Abschnitt des Rohrstücks mit dem kleineren Durchmesser ein zweites Rohr aufschiebbar ist. Durch diese einfache Verbindung werden die Kosten weiter reduziert.

In einer bevorzugten Ausführungsform weist die Tragstruktur sechs im Meeresgrund im Wesentlichen parallel zueinander angeordnete Pfähle auf. Die Pfähle sind dazu eingerichtet, die Tragstruktur zu stützen, welche vorzugsweise eine derartige Höhe aufweist, dass sie im Wesentlichen vom Meeresgrund bis zu der Wasseroberfläche reicht. Indem die Pfähle im Wesentlichen parallel zueinander und im Wesentlichen senkrecht zu einer Wasseroberfläche angeordnet sind, sind diese besonders einfach im Meeresgrund zu verankern. Sie weisen vorzugsweise eine derartige Länge auf, dass ein sicheres Abstützen der Tragstruktur erfolgt.

Gemäß einer weiteren bevorzugten Ausführungsform ist ein Fachwerksegment mittels mehrerer Fußknoten mit den Pfählen verbunden, wobei jeweils ein Knoten an dem oberen Ende eines Pfahls und in einer Ecke des Fachwerksegments angeordnet ist. So ist die Tragstruktur mittels der Fußknoten mit den Pfählen verbindbar. Vorzugsweise sind gemäß dieser Ausführungsform sowohl an den Pfählen, als auch an den Fußknoten Verbindungselemente angeordnet, mit denen die Tragstruktur mit den Pfählen verbindbar ist. Diese Verbindungselemente sind vorzugsweise derart ausgebildet, dass Fertigungs- und Montagetoleranzen ausgeglichen werden. Dadurch ist eine einfache Montage möglich.

Vorzugsweise sind diese Fußknoten im Wesentlichen in einer Ebene angeordnet, die durch obere Endabschnitte der im Meeresgrund angeordneten Pfähle definiert ist. Diese Ebene weist vorzugsweise eine Kontur entsprechend eines gleichmäßigen Sechsecks auf.

Besonders bevorzugt sind mittels des Fußknotens vier Rohre des Fachwerksegments miteinander verbindbar. Indem vier Rohre mit dem Fußknoten verbindbar sind, ist eine hohe Stabilität der Tragstruktur erreicht.

Gemäß einem weiteren Aspekt der Erfindung weist wenigstens ein Fachwerksegment in jeder Ecke einen Mittelknoten auf, mittels denen das Fachwerkssegment mit einem weiteren Fachwerkssegment verbindbar ist. Die Mittelknoten stellen demnach die Verbindungsstelle zwischen zwei übereinander angeordneten Fachwerksegmenten dar. Übereinander angeordnet bezieht sich hier auf eine übliche Aufstellung der Tragstruktur auf dem Meeresgrund. Die Kraftanleitung eines oben liegenden Fachwerksegments zu einem weiter unten liegenden Fachwerksegments erfolgt so über die Mittelknoten. Dabei sind die Mittelknoten derart angeordnet, dass sie in einer Ebene liegen und ein gleichmäßiges Sechseck definieren. Vorzugsweise sind die Mittelknoten dabei derart ausgerichtet, dass das durch sie definierte Sechseck konzentrisch zu dem Sechseck angeordnet ist, welches durch die im Meeresgrund angeordneten Pfähle definiert ist. Hierdurch werden eine gute Kraftübertragung und eine hohe Stabilität der Tragstruktur erreicht.

Vorzugsweise sind mittels des Mittelknotens sechs Rohre miteinander verbindbar. Vorzugsweise sind davon zwei Rohre derart angeordnet, dass sie in der Ebene liegen, welche durch die Mittelknoten definiert ist, und jeweils zwei nach oben bzw. nach unten ausgerichtet sind und zu benachbarten Fachwerksegmenten gehören. So wird eine optimale Verbindung der benachbarten Fachwerksegmente erreicht. Dadurch ist die Tragstruktur stabil und ein Materialverbrauch wird verringert.

Jedes Fachwerksegment weist mindestens einen Kreuzknoten auf, wobei ein Kreuzknoten zwischen den unteren Ecken eines Fachwerksegmentes und den oberen Ecken eines Fachwerksegmentes angeordnet ist. Ein derartiger Kreuzknoten eignet sich gut als Verbindungselement zwischen zwei Ebenen, welche die Fachwerksegmente begrenzen. Ein Kreuzknoten ist vorzugsweise dazu ausgebildet auf die Tragstruktur wirkende Torsionskräfte zu übertragen. Dadurch wird die Stabilität weiter erhöht, wodurch auch der Materialeinsatz verringert werden kann.

Vorzugsweise hat ein derartiger Kreuzknoten eine im Wesentlichen X-förmige Struktur.

Gemäß einer weiteren bevorzugten Ausführungsform weist mindestens ein Fachwerksegment an den oberen Ecken obere Knoten auf, an denen drei Rohre miteinander verbindbar sind. Ein derartiges Fachwerksegment ist besonders gut als oberstes Segment geeignet. Es bildet vorzugsweise das Abschlusssegment der Tragstruktur, welches bis an die oder über die Wasseroberfläche reicht.

Besonders bevorzugt ist es, die Stahl-Rohre mittels Orbitalschweißen mit dem jeweiligen Knoten zu verbinden. Dies ist insbesondere vorteilhaft, wenn die Knoten aus Doppelrohrstrukturen gebildet sind. Dann ist ein Rohr auf das vorstehende kleinere Rohr des Knotens aufschiebbar und mittels Orbitalschweißen mit dem Knoten verbindbar. Dazu weist der Rohrstumpf des Knotens vorzugsweise einen Außendurchmesser auf, der im Wesentlichen dem Außendurchmesser des Rohres entspricht. Orbitalschweißen ist ein Verfahren, das sich besonders gut dazu eignet derartige Rohrstrukturen miteinander zu verbinden. Dadurch ist die Wirtschaftlichkeit der Produktion der Tragstruktur weiter verbessert, wodurch Kosten reduziert werden. Ferner lassen sich mit Orbitalschweißen auf einfache Art und Weise Schweißnähte von hoher Güte erzeugen, wodurch die Lebensdauer und die Tragfähigkeit der Tragstruktur verbessert werden.

Gemäß einem weiteren Aspekt der Erfindung ist oberhalb der Fachwerkstruktur eine Schnittstelle zur Montage eines Turms einer Windenergieanlage (WEA) angeordnet. Die Schnittstelle ist vorzugsweise in einer derartigen Höhe angeordnet, dass sie oberhalb der Wasseroberfläche des Meeres ist. Indem eine derartige Schnittstelle vorgesehen ist, ist die Tragstruktur auf besonders einfache Art und Weise mit dem Turm einer Windenergieanlage verbindbar, wodurch die Montage vereinfacht wird.

Ferner ist es bevorzugt, dass unterhalb der Schnittstelle eine begehbare Plattform angeordnet ist, die in etwa im Bereich der oberen Ecken eines oberen Fachwerksegments angeordnet ist. Eine derartige begehbare Plattform kann als Anlegestelle für Serviceboote genutzt werden. Ferner können sich auf einer derartigen Plattform Servicemitarbeiter bewegen, welche eine auf der Tragstruktur montierte Windenergieanlage warten müssen. Hierdurch wird der Betrieb der Tragstruktur vereinfacht.

Gemäß einer weiteren Ausführungsform ist es bevorzugt, dass die Rohre eine Wanddicke von bis zu etwa 30 mm, vorzugsweise etwa im Bereich von 25,4 mm aufweisen und/oder im Warmbreitbandverfahren hergestellt sind. Derartige Wanddicken eignen sich besonders gut für die Tragstruktur. Sie bieten eine ausreichende Stabilität ohne unnötig hohen Materialverbrauch zu erzeugen. Dadurch werden auch die Kosten gesenkt. Ferner ist ein Warmbreitbandverfahren eine einfache Möglichkeit derartige Rohre herzustellen. Vorzugsweise werden die Rohre abschließend mittels einer HFI-Schweißnaht verbunden.

In einer weiteren bevorzugten Ausführungsform sind die Rohre wenigstens teilweise mit einem Überzug beschichtet, insbesondere mit einem Kunststoff-Überzug. Die Tragstruktur ist dazu eingerichtet im Meer angeordnet zu werden. Durch den Salzgehalt des Wassers ist die Tragstruktur daher einer stark korrosiven Atmosphäre ausgesetzt. Durch einen Überzug wird die Tragstruktur daher vor Korrosion geschützt, wodurch die Lebensdauer der Tragstruktur verbessert ist. Ferner reduziert sich hierdurch auch der Wartungsaufwand.

Besonders bevorzugt weist die Tragstruktur sechs Pfähle und drei oder vier Fachwerksegmente auf. Drei oder vier Fachwerksegmente sind bevorzugte Anzahlen an Segmenten, durch die einerseits eine entsprechende Höhe einer Tragstruktur herstellbar ist, andererseits eine gute Stabilität bei geringem Materialverbrauch erreichbar ist.

Vorzugsweise sind die Pfähle sowie die Stäbe der Fachwerkstruktur aus einem Stahl gebildet. Stahl ist ein gut verfügbarer Werkstoff, der eine hohe Stabilität gewährleistet. Ferner ist Stahl kostengünstig.

Bei einer Montage einer erfindungsgemäßen Tragstruktur wird bevorzugt wie folgt vorgegangen. Zunächst wird die Arbeitsplattform oder Knoten, welche mit einer Arbeitsplattform verbindbar sind oder eine Schnittstelle zu einer Windenergieanlage bilden sollen, an einer Montage-Bühne befestigt. Eine derartige Montagebühne ist vorzugsweise höhenverstellbar. Sie ist vorzugsweise auf einem Schiff oder an Land aufgestellt. Die Tragstruktur wird dann von oben nach unten aufgebaut. Das heißt, als nächstes wird vorzugsweise, das oberste Segment unter der Arbeitsplattform oder dergleichen befestigt. Das Segment kann dazu zunächst wenigstens teilweise vorgefertigt werden und anschließend montiert werden. Alternativ werden die einzelnen Stahl-Rohre einzeln mit den an der Montage-Bühne befestigten Knoten verbunden. Dies erfolgt vorzugsweise mittels Orbitalschweißen. Nachdem ein Segment fertiggestellt ist, wird das nächste Segment montiert. Als letztes Segment wird das Segment mit den Fußknoten montiert. Anschließend kann die so gebildete Fachwerkstruktur auf im Meeresgrund angeordneten Pfählen montiert werden.

Im Folgenden wir die Erfindung anhand einiger Ausführungsbeispiele unter Bezugnahme auf die beiliegenden Figuren näher erläutert. Hierbei zeigen:
- Figur 1: ein erstes Ausführungsbeispiel eines Offshore-Fundamentes in perspektivischer Darstellung;
- Figur 2: ein zweites Ausführungsbeispiel eines Offshore-Fundamentes in perspektivischer Darstellung;
- Figur 3: ein drittes Ausführungsbeispiel eines Offshore-Fundamentes in perspektivischer Darstellung;
- Figur 4: einen Mittelknoten;
- Figur 5: einen oberen Knoten;
- Figur 6: einen Kreuzknoten; und
- Figur 7: einen Fußknoten.

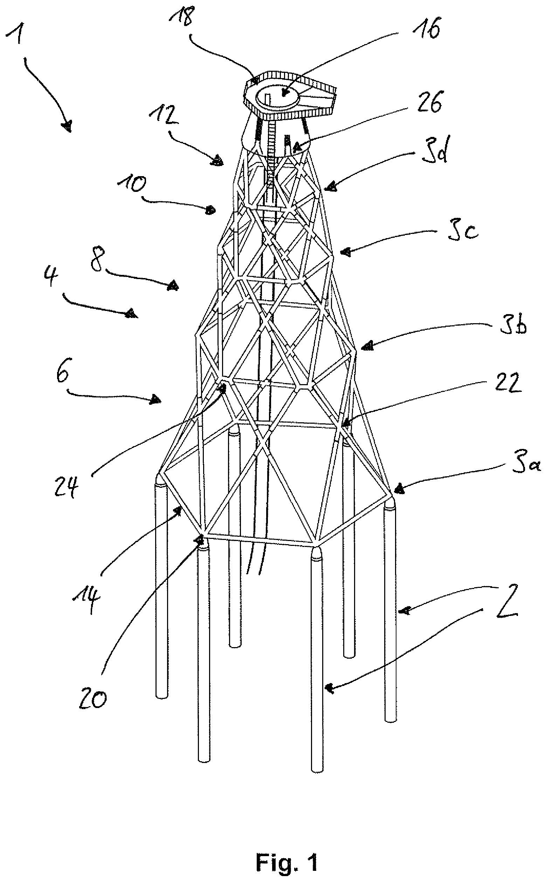

Die Offshore-Tragstruktur 1 für Windenergieanlagen (WEA) weist gemäß Figur 1 sechs im Meeresgrund verankerbare Pfähle 2 auf (nur zwei mit Bezugszeichen versehen). Mit den Pfählen 2 ist eine Fachwerkstruktur 4 verbunden. Die Fachwerkstruktur 4 ist im Wesentlichen konisch oder kegelstumpfförmig ausgebildet und hat einen im Wesentlichen rechteckigen Querschnitt bezogen auf eine Längsachse der Fachwerkstruktur 4. Sie ist mit ihren sechs unteren Ecken 3a (nur eine mit Bezugszeichen versehen) mit den sechs Pfählen 2 verbunden. Die Fachwerkstruktur 4 weist vier Segmente 6, 8, 10, 12 auf, die übereinander im Wesentlichen koaxial zueinander angeordnet sind. Die Fachwerkstruktur 4 sowie die Segmente 6, 8, 10, 12 sind aus Rohren 14 (nur eines mit Bezugszeichen versehen) gebildet, welche mittels Knoten 20, 22, 24, 26 miteinander verbunden sind.

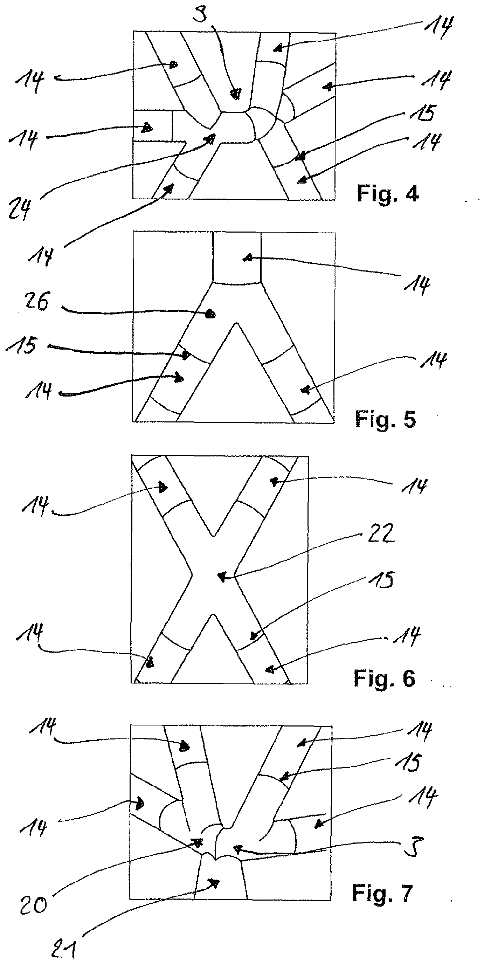

Jedes der Segmente 6, 8, 10, 12 ist im Wesentlichen konisch bzw. kegelstumpfförmig gebildet und weist einen sechseckigen Querschnitt auf, der entsprechend eines gleichmäßigen Sechsecks gebildet ist. Ein Segment 6, 8, 10, 12 weist demnach sechs untere Ecken 3a, 3b, 3c, 3d und sechs obere Ecken 3a, 3b, 3c, 3d auf (jeweils nur eine Ecke mit Bezugszeichen versehen). So weist beispielsweise das unterste Segment 6 sechs untere Ecken 3a (nur eine mit Bezugszeichen versehen) und sechs obere Ecken 3b (nur eine mit Bezugszeichen versehen) auf. Die sechs oberen Ecken 3b des untersten Segments 6 bilden gleichzeitig die unteren Ecken 3b des zweituntersten Segments 4. An den Ecken 3a, 3b, 3c, 3d sind gemäß diesem Ausführungsbeispiel entweder Fußknoten 20 oder Mittelknoten 24 angeordnet. Die Fußknoten 20 sowie die Mittelknoten 24 sind dabei jeweils derart mit im Wesentlichen horizontal ausgerichteten Rohren 14 verbunden, dass ein im Wesentlichen gleichmäßiges Sechseck gebildet wird. Die oberen Ecken 3a, 3b, 3c, 3d eines jeden Segments 6, 8, 10, 12 sind ferner mit den unteren Ecken 3a, 3b, 3c, 3d eines jeden Segments 6, 8, 10, 12 über Rohre 14 und Kreuzknoten 22 in vertikaler Richtung beabstandet miteinander verbunden. Dabei sind die Rohre 14 sowie die Kreuzknoten 22 derart an der Fachwerkstruktur 4 angeordnet, dass sie im Wesentlichen in einer Mantelfläche der Fachwerkstruktur 4 liegen. Das Innere der Fachwerkstruktur 4 ist demnach hohl bzw. frei von Rohren oder Verstrebungen. Die genaue Gestaltung der einzelnen Knoten 20, 22, 24, 26 ist aus den Figuren 4 bis 7 ersichtlich.

Am oberen Ende der Tragstruktur 1 ist an der Fachwerkstruktur 4 eine Schnittstelle 16 für die Aufnahme einer Windenergieanlage angeordnet. Die Schnittstelle 16 ist dazu mit den oberen Knoten 26 des obersten Segments 12 verbunden. An der Schnittstelle 16 ist zudem eine Arbeitsplattform 18 angeordnet. An dieser Arbeitsplattform können beispielswiese Serviceboote anlegen, mit denen Servicemitarbeiter zu der Tragstruktur 1 fahren, um eine an dieser angeordnete Windenergieanlage zu warten.

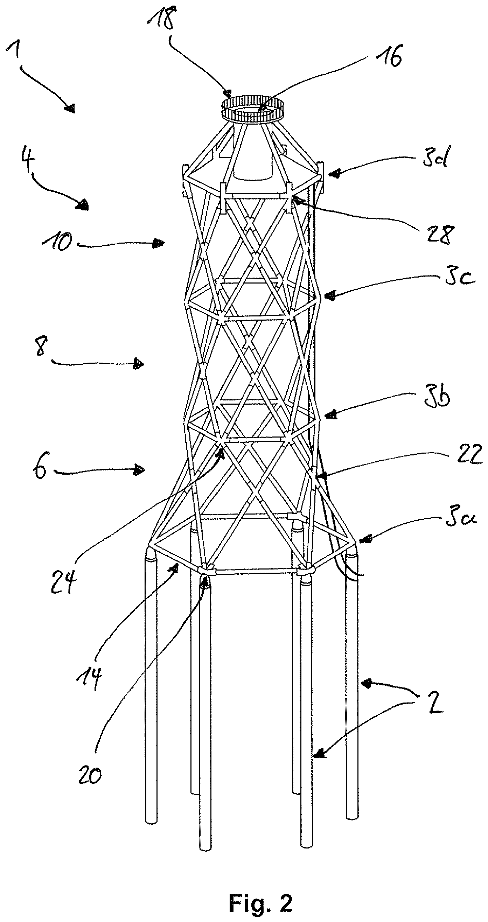

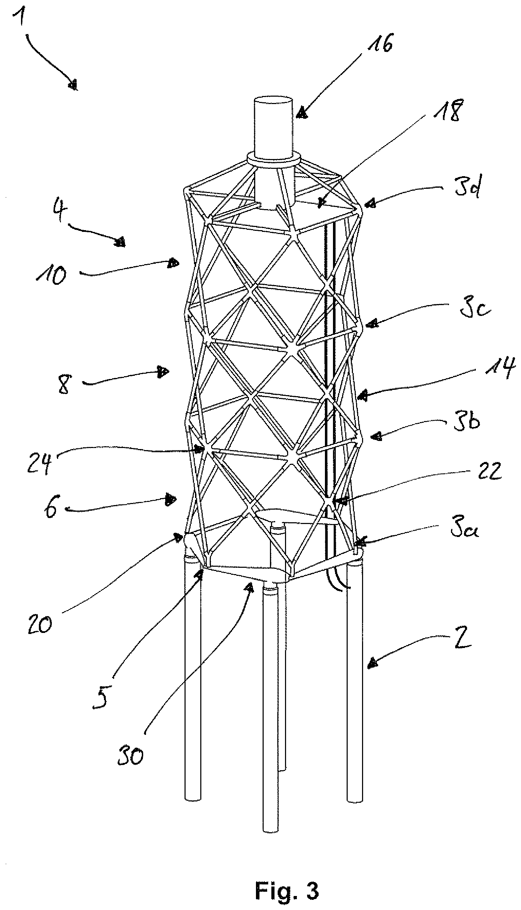

Während sich die Tragstruktur 1 gemäß dem ersten Ausführungsbeispiel (Figur 1) insbesondere für große Windenergieanlagen mit hohen Türmen und hohen Leistungen eignet, eignen sich die Tragstrukturen 1 gemäß dem zweiten und dritten Ausführungsbeispiel (Figuren 2 und 3) auch für kleinere Windenergieanlagen.

Bei den Ausführungen zu den Tragstrukturen 1 gemäß dem zweiten und dritten Ausführungsbeispiel (Figur 2 und Figur 3) sind gleiche und ähnliche Elemente mit gleichen Bezugszeichen versehen. Insofern wird vollumfänglich auf die obige Beschreibung zu der Tragstruktur 1 gemäß dem ersten Ausführungsbeispiel (Figur 1) Bezug genommen.

Die Tragstruktur 1 gemäß dem zweiten Ausführungsbeispiel (Figur 2) weist sechs Pfähle 2 auf, welche im Meeresgrund verankerbar sind. Die Fachwerkstruktur 4 der Tragstruktur 1 weist drei Segmente 6, 8, 10 auf, welche übereinander im Wesentlichen koaxial zueinander angeordnet sind. Alle Segmente 6, 8, 10 weisen einen im Wesentlichen sechseckigen Querschnitt bezogen auf eine Längsachse auf, welcher im Wesentlichen entsprechend eines gleichmäßigen Sechsecks gebildet ist. Während das unterste Segment 6 dabei eine konische bzw. kegelstumpfförmige Form aufweist, sind die beiden oberen Segmente 8, 10 im Wesentlichen zylindrisch gebildet.

Die Fachwerkstruktur 4 sowie die Segmente 6, 8, 10 sind, ebenso wie beim ersten Ausführungsbeispiel (Figur 1), aus Rohren 14 sowie Knoten 20, 22, 24, 28 gebildet. Die oberen Knoten 28 gemäß dem zweiten Ausführungsbeispiel (Figur 2) unterscheiden sich leicht von den oberen Knoten 26 gemäß dem ersten Ausführungsbeispiel (Figur 1). Dies ist darin begründet, dass die Schnittstelle 16 zur Aufnahme der Windenergieanlage gemäß dem zweiten Ausführungsbespiel leicht anders als die Schnittstelle 16 gemäß dem ersten Ausführungsbeispiel ausgebildet ist.

Die Tragstruktur 1 gemäß dem dritten Ausführungsbeispiel (Figur 3) weist eine Fachwerkstruktur 4 auf, die aus drei Segmenten 6, 8, 10 gebildet ist, welche im Wesentlichen zylindrisch mit einem sechseckigen Querschnitt ausgebildet sind. Im Unterschied zu den ersten beiden Ausführungsbeispielen (Figuren 1 und 2) weist die Tragstruktur 1 gemäß dem dritten Ausführungsbeispiel nur vier Pfähle 2 auf, welche im Meeresgrund verankerbar sind. Die oberen Abschnitte der Pfähle 2 sind mit speziell geformten Aufnahmestreben 30 (nur eine mit Bezugszeichen versehen) verbunden, sodass das sechseckige Segment 6 mittels Fußknoten 20 mit den Aufnahmestreben 30 verbindbar ist. Die Tragstruktur 1 mit nur vier Pfählen 2 auszustatten kann vorteilhaft sein, wenn die Windenergieanlage, welche auf der Tragstruktur 1 zu montieren ist, kleiner ist oder der Meeresgrund es nicht erlaubt mehr als vier Pfähle 2 einzutreiben.

In den Figuren 4 bis 7 sind die verschiedenen Knoten 20, 22, 24, 26 detailliert dargestellt. Gemäß Figur 4 ist ein Mittelknoten derart gestaltet, dass er eine Ecke 3 einer Tragstruktur 1 (in Figuren 4 bis 7 nicht gezeigt) bilden kann. Der Mittelknoten 24 ist als Doppelrohrstruktur ausgebildet und dazu eingerichtet sechs Rohre 14 miteinander zu verbinden. Die Rohre 14 sind vorzugsweise HFI-Rohre und mittels Orbitalschweißnähten 15 mit dem Knoten 24 verbunden.

Der in Figur 5 dargestellte obere Knoten 26 ist im Wesentlichen V- oder Y-förmig gebildet und dazu eingerichtet drei Rohre 14 miteinander zu verbinden. Die Rohre 14 sind wiederum mittels Orbitalschweißen mit dem Knoten 26 verbunden (nur eine Schweißnaht 15 mit Bezugszeichen versehen). Das bezogen auf Figur 5 obere Rohr 14 ist dazu eingerichtet mit einer Plattform 18 oder einer Schnittfläche 16 der Tragstruktur 1 verbunden zu werden (in Figur 5 nicht gezeigt). Die unteren beiden Rohre (bezogen auf Figur 5) sind vorzugsweise Teil eines obersten Segments 10 bzw. 12.

Der in Figur 6 gezeigte Kreuzknoten 22 ist im Wesentlichen X-förmig gebildet und schließt zwischen seinen Schenkeln je zwei spitze und zwei stumpfe Winkel ein. Der Kreuzknoten 22 ist dazu eingerichtet vier Rohre 14 miteinander zu verbinden. Die Rohre 14 sind dabei mittels des Kreuzknotens 22 derart miteinander verbunden, dass sie sämtlich im Wesentlichen in einer Ebene liegen.

Der Fußknoten 20 (Figur 7) ist dazu eingerichtet vier Rohre 14 miteinander zu verbinden. Ferner weist der Fußknoten 20 an der Schnittstelle 21 zum Verbinden mit den Pfählen 2 (in Figur 7 nicht gezeigt) auf.

Sämtliche Knoten 20, 22, 24, 26 sind vorzugsweise als Doppelrohrstrukturen ausgebildet. Die Rohre 14 sind vorzugsweise mittels Orbitalschweißen mit den Knoten 20, 22, 24, 26 verbunden.

## Patentansprüche

1. Offshore-Tragstruktur (1) für Windenergieanlagen mit
mehreren, vorzugsweise sechs im Meeresgrund verankerbaren, insbesondere rohrförmigen Pfählen (2), und
einer mit den Pfählen (2) verbindbaren, aus einer Vielzahl von Stäben, insbesondere Stahl-Rohren (14), zusammengesetzten Fachwerksstruktur (4), wobei die Fachwerksstruktur (4) aus mehreren übereinander angeordneten Fachwerkssegmenten (6, 8, 10, 12) zusammensetzbar ist und wenigstens ein Fachwerkssegment (6, 8, 10, 12) in jeder Ecke (3) einen Mittelknoten (24) aufweist, mittels denen das Fachwerkssegment (6, 8, 10, 12) mit einem weiteren Fachwerkssegment (6, 8, 10, 12) verbindbar ist,
wobei die Fachwerksegmente (6, 8, 10, 12) vorgefertigt sind und jedes Fachwerkssegment (6, 8, 10, 12) sechs untere Ecken (3) und sechs obere Ecken (3) aufweist, die mit den Ecken (3) eines weiteren Fachwerkssegments (6, 8, 10, 12) verbindbar sind,
wobei die Mittelknoten (24) der unteren sechs Ecken (3) und die Mittelknoten (24) der oberen sechs Ecken (3) jeweils derart angeordnet sind, dass sie in einer Ebene liegen und ein gleichmäßiges Sechseck definieren und dabei jeweils derart mit im Wesentlichen horizontal ausgerichteten Rohren (14) verbunden sind, dass ein im Wesentlichen gleichmäßiges Sechseck gebildet wird,
wobei jedes Fachwerksegment (6, 8, 10, 12) mindestens einen Kreuzknoten (22) aufweist, wobei ein Kreuzknoten (22) zwischen den unteren Ecken (3) eines Fachwerksegmentes (6, 8, 10, 12) und den oberen Ecken (3) eines Fachwerksegmentes (6, 8, 10, 12) angeordnet ist und mittels des Kreuzknotens (22) vier Rohre (14) eines Fachwerksegmentes (6, 8, 10, 12) miteinander verbindbar sind, und
wobei an einem oberen Ende der Tragstruktur (1) an der Fachwerkstruktur (4) eine Schnittstelle (16) für die Aufnahme einer Windenergieanlage angeordnet ist und die Schnittstelle (16) dazu mit dem obersten Fachwerksegment (12) verbunden ist.

2. Offshore-Tragstruktur (1) nach Anspruch 1, **dadurch gekennzeichnet, dass** die Fachwerkssegmente (6, 8, 10, 12) im Wesentlichen aus HFI (Hochfrequenz-Induktionsschweißen)-Rohren (14) zusammengesetzt sind.

3. Offshore-Tragstruktur (1) nach einem der vorstehenden Ansprüche, **dadurch gekennzeichnet, dass** einige oder alle Knoten (20, 22, 24, 26, 28) der vorgefertigten Fachwerkssegmente (6, 8, 10, 12) aus Doppelrohrstrukturen gebildet sind.

4. Offshore-Tragstruktur (1) nach mindestens einem der vorstehenden Ansprüche,
**gekennzeichnet durch** sechs im Meeresgrund im Wesentlichen parallel zueinander angeordneten Pfählen (2).

5. Offshore-Tragstruktur (1) nach mindestens einem der vorstehenden Ansprüche,
**dadurch gekennzeichnet, dass** ein Fachwerkssegment (6, 8, 10, 12) mittels mehrerer Fuß-Knoten (20) mit den Pfählen (2) verbunden ist, wobei jeweils ein Knoten (20) an dem oberen Ende eines Pfahls (2) und in einer Ecke (3a) des Fachwerkssegments (6) angeordnet ist.

6. Offshore-Tragstruktur (1) nach Anspruch 5,
**dadurch gekennzeichnet, dass** die Fuß-Knoten (20) im Wesentlichen in einer Ebene angeordnet sind, die durch obere Endabschnitte der im Meeresgrund angeordneten Pfähle (2) definiert ist.

7. Offshore-Tragstruktur (1) nach Anspruch 5 oder 6,
**dadurch gekennzeichnet, dass** mittels des Fußknotens (20) vier Rohre (14) des Fachwerkssegments (6) miteinander verbindbar sind.

8. Offshore-Tragstruktur (1) nach Anspruch 1,
**dadurch gekennzeichnet, dass** jeder Kreuzknoten (22) im Wesentlichen eine X-förmige Struktur aufweist.

9. Offshore-Tragstruktur (1) nach mindestens einem der vorstehenden Ansprüche,
**dadurch gekennzeichnet, dass** mindestens ein Fachwerkssegment (6, 8, 10, 12) in jeder oberen Ecke (3) einen oberen Knoten (26, 28) aufweist, an dem drei Rohre (14) miteinander verbindbar sind.

10. Offshore-Tragstruktur (1) nach einem der vorstehenden Ansprüche,
**dadurch gekennzeichnet, dass** die Rohre (14) mittels Orbitalschweißen mit den Knoten (20, 22, 24, 26, 28) verbunden sind.

11. Offshore-Tragstruktur (1) nach Anspruch 1,
**dadurch gekennzeichnet, dass** unterhalb der Schnittstelle (16) eine begehbare Plattform (18) angeordnet ist, die in etwa im Bereich der oberen Ecken (3) eines oberen Fachwerksegmentes (10, 12) angeordnet ist.

12. Offshore-Tragstruktur (1) nach mindestens einem der vorstehenden Ansprüche,
**dadurch gekennzeichnet, dass** die Rohre (14) eine Wanddicke von bis zu etwa 30 mm, vorzugsweise etwa im Bereich von 25,4 mm aufweisen und/oder im Warmbreitbandverfahren hergestellt sind.

13. Offshore-Tragstruktur (1) nach mindestens einem der vorstehenden Ansprüche,
**dadurch gekennzeichnet, dass** die Rohre (14) wenigstens teilweise mit einem Überzug beschichtet sind, insbesondere mit einem Kunststoff beschichtet sind.

14. Offshore-Tragstruktur (1) nach mindestens einem der vorstehenden Ansprüche,
**dadurch gekennzeichnet, dass** die Tragstruktur (1) sechs Pfähle (2) und drei oder vier Fachwerkssegmente (6, 8, 10, 12) aufweist.

15. Offshore-Tragstruktur (1) nach mindestens einem der vorstehenden Ansprüche,
**dadurch gekennzeichnet, dass** die Pfähle (2) und die Stäbe der Fachwerkstruktur (4) aus einem Stahl bestehen.

## Claims

1. Offshore supporting structure (1) for wind energy installations with multiple, preferably six, specifically tube shaped piles (2) that can be anchored in the seabed, and
a latticework structure (4) which can be attached to the piles (2) and is formed of multiple bars, specifically steel tubes (14), wherein the latticework structure (4) can be assembled from multiple latticework segments (6, 8, 10, 12) arranged one above the other and at least one latticework segment (6, 8, 10, 12) has a middle node (24) in each corner (3), which can be used to connect the latticework segment (6, 8, 10, 12) to another latticework segment (6, 8, 10, 12),
wherein the latticework segments (6, 8, 10, 12) are prefabricated and each latticework segment (6, 8, 10, 12) has six lower corners (3) and six upper corners (3) that can be attached to the corners (3) of another latticework segment (6, 8, 10, 12),
wherein the middle nodes (24) of the lower six corners (3) and the middle nodes (24) of the upper six corners (3) are each arranged such that they lie on one plane and define a uniform hexagon and are each connected to essentially horizontally placed tubes (14), thereby forming an essentially uniform hexagon,
wherein each latticework segment (6, 8, 10, 12) has at least one cross node (22), wherein a cross node (22) is positioned between the lower corners (3) of a latticework segment (6, 8, 10, 12) and the upper corners (3) of a latticework segment (6, 8, 10, 12) and four tubes (14) of a latticework segment (6, 8, 10, 12) can be connected to one another via the cross node (22), and
wherein an interface (16) is positioned on the latticework structure (4) at an upper end of the supporting structure (1) to hold a wind energy installation, the interface (16) therefore being attached to the top latticework segment (12).

2. Offshore supporting structure (1) according to claim 1, **characterized in that** the latticework segments (6, 8, 10, 12) are essentially assembled from HFIW (high-frequency induction welding) tubes (14).

3. Offshore supporting structure (1) according to one of the above claims, **characterized in that** some or all nodes (20, 22, 24, 26, 28) in the prefabricated latticework segments (6, 8, 10, 12) are made of double-walled pipe structures.

4. Offshore supporting structure (1) according to at least one of the above claims, **characterized by** six piles (2) sunk into the seabed, essentially parallel to one another.

5. Offshore supporting structure (1) according to at least one of the above claims, **characterized in that** one latticework segment (6, 8, 10, 12) is attached to the piles (2) by multiple base nodes (20), wherein each individual node (20) is located at the upper end of a pile (2) and in one corner (3a) of the latticework segment (6).

6. Offshore supporting structure (1) according to claim 5, **characterized in that** the base nodes (20) are essentially arranged on one plane, which is defined by upper end sections of the piles (2) sunk into the seabed.

7. Offshore supporting structure (1) according to claim 5 or 6, **characterized in that** four tubes (14) of the latticework segment (6) can be connected to one another via the base node (20).

8. Offshore supporting structure (1) according to claim 1, **characterized in that** each cross node (22) is essentially X-shaped.

9. Offshore supporting structure (1) according to at least one of the above claims, **characterized in that** at least one latticework section (6, 8, 10, 12) has an upper node (26, 28) in each upper corner (3), on which three tubes (14) can be connected to one another.

10. Offshore supporting structure (1) according to one of the above claims, **characterized in that** the tubes (14) are attached to the nodes (20, 22, 24, 26, 28) using orbital welding.

11. Offshore supporting structure (1) according to claim 1, **characterized in that** there is an accessible platform (18) beneath the interface (16), located approximately in the area of the upper corners (3) of an upper latticework segment (10, 12).

12. Offshore supporting structure (1) according to at least one of the above claims, **characterized in that** the tubes (14) have a wall thickness of up to approximately 30 mm, preferably approximately in the range of 25.4 mm, and/or are manufactured using a hot-rolled wide strip process.

13. Offshore supporting structure (1) according to at least one of the above claims, **characterized in that** the tubes (14) are at least partially coated with a coating, specifically coated with a plastic.

14. Offshore supporting structure (1) according to at least one of the above claims, **characterized in that** the supporting structure (1) has six piles (2) and three or four latticework segments (6, 8, 10, 12).

15. Offshore supporting structure (1) according to at least one of the above claims, **characterized in that** the piles (2) and bars of the latticework structure (4) are made of a steel.

## Revendications

1. Structure porteuse offshore (1) pour des éoliennes, comprenant
plusieurs, de préférence six, poteaux (2) en particulier de forme tubulaire pouvant être ancrés dans le fond marin, et
une structure en treillis (4) pouvant être reliée aux poteaux (2), composée d'une multitude de barreaux, en particulier de tubes en acier (14), dans laquelle la structure en treillis (4) peut être composée de plusieurs segments de treillis (6, 8, 10, 12) disposés les uns au-dessus des autres et au moins un segment de treillis (6, 8, 10, 12) présente dans chaque angle (3) un noeud central (24), à l'aide desquels le segment de treillis (6, 8, 10, 12) peut être relié à un autre segment de treillis (6, 8, 10, 12),
dans laquelle les segments de treillis (6, 8, 10, 12) sont préalablement fabriqués et chaque segment de treillis (6, 8, 10, 12) présente six angles inférieurs (3) et six angles supérieurs (3), qui peuvent être reliés aux angles (3) d'un autre segment de treillis (6, 8, 10, 12),
dans laquelle les noeuds centraux (24) des six angles inférieurs (3) et les noeuds centraux (24) des six angles supérieurs (3) sont disposés respectivement de telle manière qu'ils se trouvent dans un plan et qu'ils définissent un hexagone homogène et sont reliés dans ce cadre respectivement aux tubes (14) orientés sensiblement de manière horizontale de telle manière qu'un hexagone sensiblement homogène est formé,
dans laquelle chaque segment de treillis (6, 8, 10, 12) présente au moins un noeud plat (22), dans laquelle un noeud plat (22) est disposé entre les angles inférieurs (3) d'un segment de treillis (6, 8, 10, 12) et les angles supérieurs (3) d'un segment de treillis (6, 8, 10, 12) et quatre tubes (14) d'un segment de treillis (6, 8, 10, 12) peuvent être reliés entre eux au moyen du noeud plat (22), et
dans laquelle une interface (16) pour le logement d'une éolienne est disposée au niveau d'une extrémité supérieure de la structure porteuse (1) au niveau de la structure en treillis (4) et l'interface (16) est reliée en plus au segment de treillis (12) le plus haut.

2. Structure porteuse offshore (1) selon la revendication 1,
**caractérisée en ce que** les segments de treillis (6, 8, 10, 12) sont composés sensiblement de tubes (14) à soudage par induction de haute fréquence.

3. Structure porteuse offshore (1) selon l'une quelconque des revendications précédentes,
**caractérisée en ce que** certains ou tous les noeuds (20, 22, 24, 26, 28) des segments de treillis (6, 8, 10, 12) préalablement fabriqués sont formés à partir de structures à double tube.

4. Structure porteuse offshore (1) selon au moins l'une quelconque des revendications précédentes,
**caractérisée par** six poteaux (2) disposés dans le fond marin sensiblement de manière parallèle les uns par rapport aux autres.

5. Structure porteuse offshore (1) selon au moins l'une quelconque des revendications précédentes,
**caractérisée en ce qu'**un segment de treillis (6, 8, 10, 12) est relié aux poteaux (2) au moyen de plusieurs noeuds d'embase (20), dans laquelle respectivement un noeud (20) est disposé au niveau de l'extrémité supérieure d'un poteau (2) et dans un angle (3a) du segment de treillis (6).

6. Structure porteuse offshore (1) selon la revendication 5,
**caractérisée en ce que** les noeuds d'embase (20) sont disposés sensiblement dans un plan, qui est défini par des sections d'extrémité supérieures des poteaux (2) disposés dans le fond marin.

7. Structure porteuse offshore (1) selon la revendication 5 ou 6,
**caractérisée en ce que** quatre tubes (14) du segment de treillis (6) peuvent être reliés les uns aux autres au moyen du noeud d'embase (20).

8. Structure porteuse offshore (1) selon la revendication 1,
**caractérisée en ce que** chaque noeud plat (22) présente sensiblement une structure en forme de X.

9. Structure porteuse offshore (1) selon au moins l'une quelconque des revendications précédentes,
**caractérisée en ce qu'**au moins un segment de treillis (6, 8, 10, 12) présente, dans chaque angle supérieur (3), un noeud supérieur (26, 28), au niveau duquel trois tubes (14) peuvent être reliés les uns aux autres.

10. Structure porteuse offshore (1) selon l'une quelconque des revendications précédentes,
**caractérisée en ce que** les tubes (14) sont reliés aux noeuds (20, 22, 24, 26, 28) au moyen d'un soudage orbital.

11. Structure porteuse offshore (1) selon la revendication 1,
**caractérisée en ce qu'**une plate-forme (18) pouvant être empruntée est disposée sous l'interface (16), laquelle est disposée approximativement dans la zone des angles supérieurs (3) d'un segment de treillis (10, 12) supérieur.

12. Structure porteuse offshore (1) selon au moins l'une quelconque des revendications précédentes,
**caractérisée en ce que** les tubes (14) présentent une épaisseur de paroi pouvant aller jusqu'à environ 30 mm, de préférence approximativement de l'ordre de 25,4 mm et/ou sont fabriqués lors du procédé à chaud à larges bandes.

13. Structure porteuse offshore (1) selon au moins l'une quelconque des revendications précédentes,
**caractérisée en ce que** les tubes (14) sont recouverts au moins en partie d'un revêtement, en particulier sont recouverts d'une matière plastique.

14. Structure porteuse offshore (1) selon au moins l'une quelconque des revendications précédentes,
**caractérisée en ce que** la structure porteuse (1) présente six poteaux (2) et trois ou quatre segments de treillis (6, 8, 10, 12).

15. Structure porteuse offshore (1) selon au moins l'une quelconque des revendications précédentes,
**caractérisée en ce que** les poteaux (2) et les barreaux de la structure en treillis (4) sont constitués d'un acier.
